# EUROPEAN PATENT APPLICATION

(11) **EP 3 460 457 A1**
(43) Date of publication of application: **27.03.2019**
(21) Application number: 17798948.0
(22) Date of filing: 23.02.2017
(51) Int. Cl.: G01N 21/64

(54) **CALIBRATION REFERENCE BODY FOR FLUORESCENCE MEASUREMENT DEVICE**

(30) Priority: 19.05.2016 JP 2016100683
(71) Applicant: Hamamatsu Photonics K.K., Hamamatsu-shi, Shizuoka 435-8558 (JP)
(72) Inventor: HASEGAWA, Yutaka, Hamamatsu-shi Shizuoka 435-8558 (JP); NAKAMURA, Takayuki, Hamamatsu-shi Shizuoka 435-8558 (JP); ISHIGAMI, Yoshihiro, Hamamatsu-shi Shizuoka 435-8558 (JP); KONDO, Fusanori, Hamamatsu-shi Shizuoka 435-8558 (JP)
(74) Representative: Grünecker Patent- und Rechtsanwälte PartG mbB
(86) International application number: PCT/JP2017/006774
(87) International publication number: WO 2017/199510

(57) **Abstract**

A reference body 1 includes: a support 10 provided with a first light passing portion 18, a second light passing portion 19, a first accommodating space 14, and a second accommodating space 15; a first fluorescent body 20 accommodated in the first accommodating space 14 and configured to emit first fluorescence in a second wavelength band when irradiated with first excitation light in a first wavelength band through the first light passing portion 18; a second fluorescent body 30 accommodated in the second accommodating space 15 and configured to emit second fluorescence in the second wavelength band when irradiated with second excitation light in the first wavelength band through the second light passing portion 19; and a light shielding portion 13 disposed between the first accommodating space 14 and the second accommodating space 15. In a case where a light amount of the first excitation light incident on the first light passing portion 18 and a light amount of the second excitation light incident on the second light passing portion 19 are equal to each other, a light amount of the first fluorescence emitted from the first light passing portion 18 and a light amount of the second fluorescence emitted from the second light passing portion 19 are different from each other.

## Description

### Technical Field

The present disclosure relates to a calibration reference body for a fluorescence measurement device.

### Background Art

Immunochromatography assay (lateral flow immunoassay) is known as a method of a sample test such as a blood test. In recent, in a quantitative diagnosis including a low color development region which is difficult to visually determine, a method using a fluorescent label has been used. For example, Patent Literature 1 discloses a technique related to an immunochromatography assay using a fluorescent label.

### Citation List

### Patent Literature

Patent Literature 1: Japanese Unexamined Patent Publication No. 2006-208386

### Summary of Invention

### Technical Problem

In the method using a fluorescent label as described above, a fluorescence measurement device is used. However, in order to obtain a highly reliable test result, fluorescence measurement by the fluorescence measurement device needs to be performed with a constant measurement sensitivity. For this reason, a reference body for calibrating the fluorescence measurement device (for example, identifying a difference between machines, adjusting the measurement sensitivity, performing failure diagnosis, or the like) is required.

The present disclosure has been made in view of the above problems, and an object of the present disclosure is to provide a calibration reference body for a fluorescence measurement device that can stably identify a measurement sensitivity of the fluorescence measurement device in a wide dynamic range.

### Solution to Problem

According to an embodiment of the present disclosure, there is provided a calibration reference body for a fluorescence measurement device, including: a support provided with a first light passing portion, a second light passing portion, a first accommodating space facing the first light passing portion, and a second accommodating space facing the second light passing portion; a first fluorescent body accommodated in the first accommodating space and configured to emit first fluorescence in a second wavelength band when irradiated with first excitation light in a first wavelength band through the first light passing portion; a second fluorescent body accommodated in the second accommodating space and configured to emit second fluorescence in the second wavelength band when irradiated with second excitation light in the first wavelength band through the second light passing portion; and a light shielding portion disposed between the first accommodating space and the second accommodating space. In the reference body, in a case where a light amount of the first excitation light incident on the first light passing portion and a light amount of the second excitation light incident on the second light passing portion are equal to each other, a light amount of the first fluorescence emitted from the first light passing portion and a light amount of the second fluorescence emitted from the second light passing portion are different from each other.

In this reference body, it is possible to suppress the influence of the excitation light and the fluorescence in one of the fluorescent bodies on the excitation light and the fluorescence in the other fluorescent body by the light shielding portion disposed between the first accommodating space and the second accommodating space, and in a case where the light amount of the first excitation light incident on the first light passing portion and the light amount of the second excitation light incident on the second light passing portion are equal to each other, the light amount of the first fluorescence emitted from the first light passing portion and the light amount of the second fluorescence emitted from the second light passing portion are different from each other, so that it is possible to stably identify the measurement sensitivity in a wide dynamic range by one measurement.

In one aspect, the support may include a first holding portion that holds the first fluorescent body accommodated in the first accommodating space and a second holding portion that holds the second fluorescent body accommodated in the second accommodating space. The first fluorescent body is held in the first accommodating space, and the second fluorescent body is held in the second accommodating space, so that variations in measured values are suppressed. Therefore, it is possible to improve the accuracy of calibration.

In one aspect, the first holding portion may be a first wall portion that defines the first accommodating space, and the second holding portion may be a second wall portion that defines the second accommodating space. At least one of the first wall portion and the second wall portion may constitute the light shielding portion. In this case, since light shielding by the light shielding portion can be reliably performed, variations in measured values are suppressed. Therefore, it is possible to improve the accuracy of calibration.

In one aspect, at least the first region surrounding the first light passing portion and the second region surrounding the second light passing portion of the support may have a light shielding property. In this case, the influence of light (first excitation light) irradiated to the first region and light (second excitation light) irradiated to the second region on the measurement of the first fluorescence and the second fluorescence can be suppressed, so that variations in measured values are suppressed. Therefore, it is possible to improve the accuracy of calibration.

In one aspect, the support may include a main body provided with the first accommodating space and the second accommodating space, and a cover provided with the first light passing portion and the second light passing portion. In this case, it is easy to configure the main body and the cover with materials corresponding to respective functions.

In one aspect, the reference body may further include a first light transmitting member which is disposed between the first light passing portion and the first fluorescent body and transmits the first excitation light and the first fluorescence and a second light transmitting member which is disposed between the second light passing portion and the second fluorescent body and transmits the second excitation light and the second fluorescence. In this case, deterioration of the fluorescent bodies (the first fluorescent body and the second fluorescent body) caused by physical and chemical factors can be prevented by the first light transmitting member and the second light transmitting member, so that it is possible to perform calibration with a high accuracy over a long period of time.

In one aspect, the reference body may further include a first optical bonding material disposed between the first fluorescent body and the first light transmitting member and a second optical bonding material disposed between the second fluorescent body and the second light transmitting member. In this case, since the optical loss at an interface between the fluorescent body and the light transmitting member is suppressed, variations in the measured values are suppressed. Therefore, it is possible to improve the accuracy of calibration.

In one aspect, the first light transmitting member may have a function of changing characteristics of the first excitation light, and the second light transmitting member may have a function of changing characteristics of the second excitation light. In this case, by selecting the light transmitting member (the first light transmitting member and the second light transmitting member), for example, the light amount and the wavelength of the transmitted light, that is, the light amount and the wavelength of the excitation light (the first excitation light and the second excitation light) irradiated to the fluorescent body (the first fluorescent body and the second fluorescent body) can be adjusted.

In one aspect, at least one of the first fluorescent body and the second fluorescent body may include a semiconductor layer having a light emitting layer containing a semiconductor material as a fluorescent substance. By appropriately selecting the semiconductor material, the measurement sensitivity in a desired fluorescence wavelength band can be identified.

In one aspect, the semiconductor material may be a compound semiconductor containing Ga. By appropriately selecting the compound material, the measurement sensitivity in a desired fluorescence wavelength band can be identified.

In one aspect, the compound semiconductor may be GaAs₍₁₋ₓ₎Pₓ (0 ≤ x ≤ 1). In this case, good fluorescence is obtained, particularly, in the red range.

In one aspect, the semiconductor layer may further include a layer containing AlGaAsP on a side of the light emitting layer on which the excitation light is incident and on the side opposite thereto. In this case, the luminous efficiency of the fluorescent body tends to be excellent.

In one aspect, at least one of the first fluorescent body and the second fluorescent body may further include an antioxidation layer on a side of the light emitting layer on which the excitation light is incident. In this case, since deterioration of the fluorescent body caused by oxidation can be prevented, it is possible to perform calibration with a high accuracy over a long period of time.

In one aspect, at least one of the first fluorescent body and the second fluorescent body may be made of a fluorescent resin containing a light transmissive resin and a fluorescent substance dispersed in the light transmissive resin. By appropriately selecting the fluorescent substance, the measurement sensitivity in a desired fluorescence wavelength band can be identified.

In one aspect, at least one of the first fluorescent body and the second fluorescent body may be made of a fluorescent glass containing a glass and a fluorescent substance dispersed in the glass. By appropriately selecting the fluorescent substance, the measurement sensitivity in a desired fluorescence wavelength band can be identified.

### Advantageous Effects of Invention

According to the present disclosure, it is possible to provide a calibrating reference body for a fluorescence measurement device capable of stably identifying a measurement sensitivity of the fluorescence measurement device in a wide dynamic range.

### Brief Description of Drawings

FIG. 1 is a perspective view of an optical head and a chromatographic test tool of a fluorescence measurement device.
FIG. 2 is a plan view of a reference body according to an embodiment of the present disclosure.
FIG. 3 is a cross-sectional view of a reference body taken along line III-III of FIG. 2.
FIG. 4 is a plan view of a main body of the reference body of FIG. 2.
FIG. 5 is a cross-sectional view of a semiconductor fluorescent body constituting a fluorescent body of the reference body of FIG. 2.
FIG. 6(a) is a perspective view of Modified Example 1 of the fluorescent body of the reference body according to an embodiment of the present disclosure. FIG. 6(b) is a perspective view of Modified Example 2 of the fluorescent body of the reference body according to an embodiment of the present disclosure.
FIG. 7 is a diagram illustrating a fluorescence excitation spectrum of the fluorescent body according to an embodiment of the present disclosure.
FIG. 8 is a diagram illustrating a fluorescence profile obtained by fluorescence measurement of a reference body according to an embodiment of the present disclosure.

### Description of Embodiments

Hereinafter, embodiments according to the present disclosure will be described in detail with reference to the drawings. In the following description, the same reference numerals are used for the same or corresponding elements, and redundant description thereof is omitted.

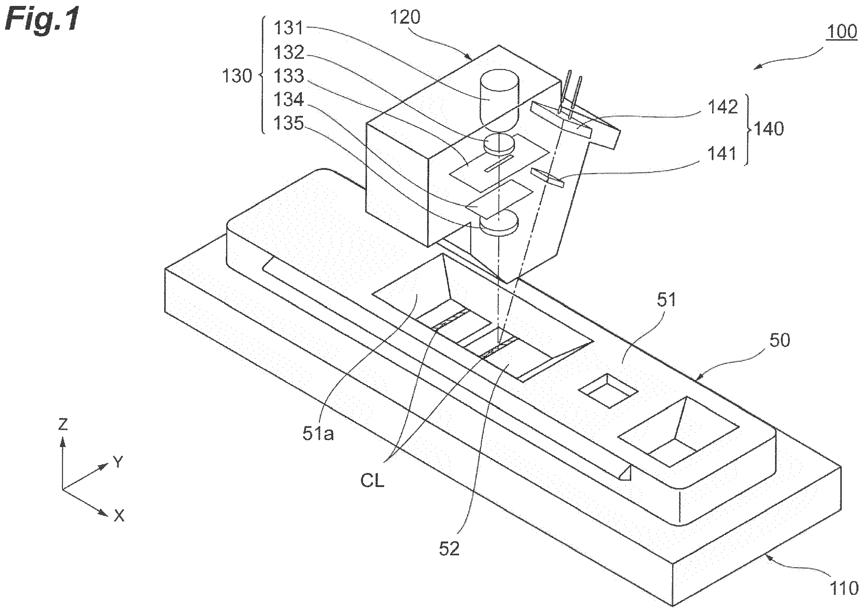

First, a fluorescence measurement device using a reference body according to this embodiment will be described. A fluorescence measurement device 100 illustrated in FIG. 1 is a fluorescence measurement device (fluorescent immunochromato reader) used for an immunochromatography assay. As illustrated in FIG. 1, the fluorescence measurement device 100 includes a support base 110, an optical head 120, and a scanning mechanism (not illustrated).

The support base 110 supports a chromatographic test tool 50. The chromatographic test tool 50 has a casing 51 and a chromatographic test piece 52. The casing 51 has a rectangular plate shape having an X axis direction as the longitudinal direction and a Z axis direction as the thickness direction. The casing 51 is formed with an opening 51a which is open to one side in the Z axis direction. The chromatographic test piece 52 is accommodated in the casing 51. As a result of, for example, antigen-antibody reaction, a plurality of colored lines CL extending along a Y axis direction are formed in the chromatographic test piece 52. The plurality of colored lines CL are aligned along the X axis direction and are exposed to the outside through the opening 51a. Since each colored line CL contains a fluorescent substance (and a fluorescent reagent containing the fluorescent substance) bonded to an antigen or an antibody, each colored line CL excited by excitation light in the first wavelength band emits fluorescence in the second wavelength band.

The optical head 120 includes an irradiation optical system 130 that irradiates the chromatographic test tool 50 with excitation light in the first wavelength band and a detection optical system 140 that detects fluorescence in the second wavelength band emitted from the chromatographic test tool 50. The irradiation optical system 130 includes a semiconductor light emitting element 131, a collimator lens 132, a light flux shaping member 133, a short pass filter 134, and a condenser lens 135. The detection optical system 140 includes a long pass filter 141 and a semiconductor light receiving element 142. In addition, the fluorescence measurement device 100 has a mechanism that prevents disturbance light from entering.

In the fluorescence measurement device 100, the optical head 120 is scanned in the X axis direction by a scanning mechanism. At this time, the chromatographic test tool 50 is irradiated with the excitation light of the first wavelength band emitted from the semiconductor light emitting element 131 through the collimator lens 132, the light flux shaping member 133, the short pass filter 134, and the condenser lens 135. When each colored line CL is irradiated with the excitation light through the opening 51a, fluorescence in the second wavelength band is emitted from each colored line CL, and the fluorescence is incident on the semiconductor light receiving element 142 through the long pass filter 141. As a result, the chromaticity of each colored line CL is measured.

Herein, the first wavelength band denotes a wavelength of light (excitation light) having energy necessary for exciting electrons in a fluorescent substance emitting fluorescence in the second wavelength band to emit the fluorescence in the second wavelength band. Therefore, usually, the first wavelength band and the second wavelength band do not overlap each other in the wavelength range, and the peak wavelength of the first wavelength band is shorter than the peak wavelength of the second wavelength band.

In other words, the first wavelength band, which is the wavelength band of the excitation light, is determined according to excitation characteristics of the fluorescent substance used, and the second wavelength band, which is the wavelength band of fluorescence emitted by the colored line CL, is determined according to fluorescence characteristics of the colored line CL, that is, the fluorescence characteristics of the fluorescent substance contained in the colored line CL. In addition, the first wavelength band is adjusted by the types of the semiconductor light emitting element 131 and the short pass filter 134 and the like.

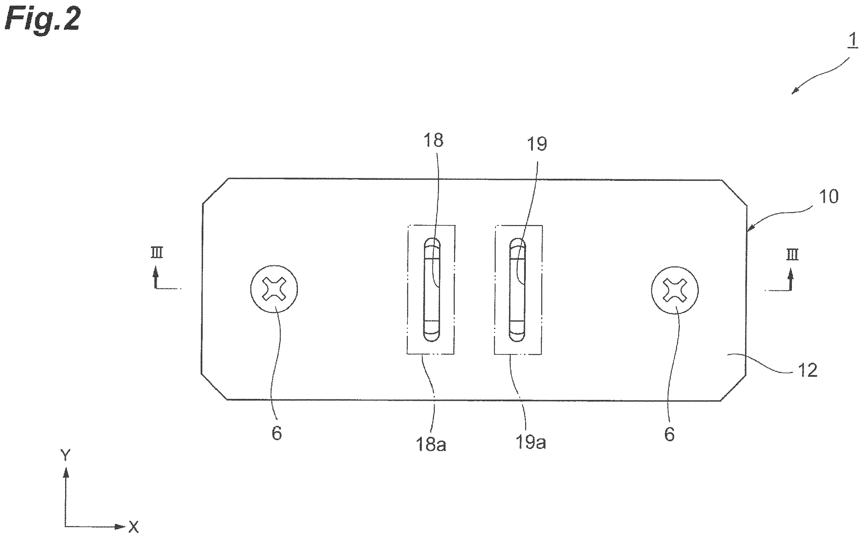

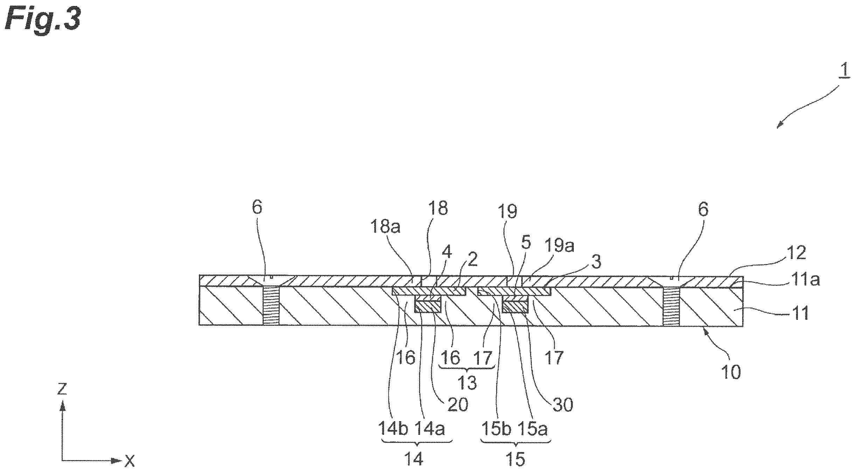

Next, a reference body according to this embodiment will be described. A reference body 1 illustrated in FIGS. 2 and 3 is used for calibration of the fluorescence measurement device 100 described above. As illustrated in FIGS. 2 and 3, the reference body 1 has a rectangular plate shape having the X axis direction as the longitudinal direction and the Z axis direction as the thickness direction. The shape and size of the reference body 1 are the shape and size in accordance with the chromatographic test tool 50.

The reference body 1 includes a support 10, a first fluorescent body 20, and a second fluorescent body 30. The reference body 1 further includes a first light transmitting member 2, a second light transmitting member 3, a first optical bonding material 4, and a second optical bonding material 5.

The support 10 has a main body 11 and a cover 12. Each of the main body 11 and the cover 12 has a rectangular plate shape having the X axis direction as the longitudinal direction and the Z axis direction as the thickness direction. The cover 12 is disposed on a surface 11a (a surface on one side in the Z axis direction) of the main body 11 and is fixed to the main body 11 by bolts 6.

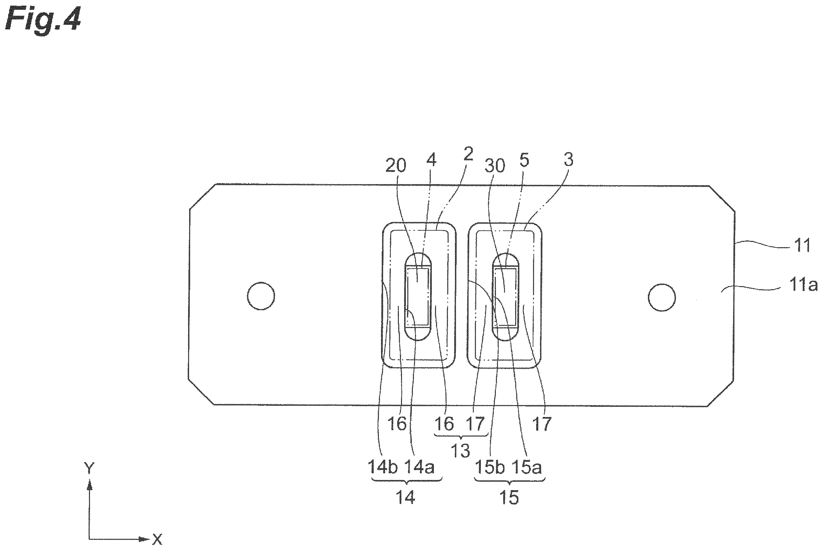

As illustrated in FIGS. 3 and 4, a first accommodating space 14 and a second accommodating space 15 that are open to one side in the Z axis direction are provided on the surface 11a of the main body 11. The first accommodating space 14 and the second accommodating space 15 are aligned in the X axis direction. The first accommodating space 14 includes a first recessed portion 14a formed in the surface 11a of the main body 11 and a first width-expanded portion 14b of which the width is expanded on the opening side of the first recessed portion 14a. The second accommodating space 15 includes a second recessed portion 15a formed in the surface 11a of the main body 11 and a second width-expanded portion 15b of which the width is expanded on the opening side of the second recessed portion 15a.

The first fluorescent body 20 is disposed inside the first recessed portion 14a. The first fluorescent body 20 is held by a first wall portion (first holding portion) 16 that defines the first recessed portion 14a. The first fluorescent body 20 emits first fluorescence in the second wavelength band when irradiated with the first excitation light in the first wavelength band. The first light transmitting member 2 is disposed inside the first width-expanded portion 14b. The first light transmitting member 2 transmits the first excitation light irradiated to the first fluorescent body 20 and the first fluorescence emitted from the first fluorescent body 20. The first light transmitting member 2 has a function of changing the characteristics of the first excitation light. As an example, the first light transmitting member 2 has a dimming function of decreasing the light amount of the first excitation light that is transmitted, a wavelength selecting function of transmitting only light having a specific wavelength band, and the like. The first optical bonding material 4 is disposed between the first fluorescent body 20 and the first light transmitting member 2. The first optical bonding material 4 optically bonds the first fluorescent body 20 and the first light transmitting member 2 and suppresses a change in optical properties (wavelength, light amount, and the like) of the light passing between the first fluorescent body 20 and the first light transmitting member 2. As an example, the first optical bonding material 4 may be a resin having an optical transmissive property and an adhesive property. In addition, in FIG. 4, the first light transmitting member 2 and the first optical bonding material 4 are indicated by two-dot dashed lines.

The second fluorescent body 30 is disposed in the second recessed portion 15a. The second fluorescent body 30 is held by a second wall portion (second holding portion) 17 that defines the second recessed portion 15a. The second fluorescent body 30 emits second fluorescence in the second wavelength band when irradiated with the second excitation light in the first wavelength band. The second light transmitting member 3 is disposed in the second width-expanded portion 15b. The second light transmitting member 3 transmits the second excitation light irradiated to the second fluorescent body 30 and the second fluorescence emitted from the second fluorescent body 30. The second light transmitting member 3 has a function of changing the characteristics of the second excitation light. As an example, the second light transmitting member 3 has a dimming function for decreasing the light amount of the second excitation light that is transmitted, a wavelength selecting function of transmitting only light having a specific wavelength band, and the like. The second optical bonding material 5 is disposed between the second fluorescent body 30 and the second light transmitting member 3. The second optical bonding material 5 optically bonds the second fluorescent body 30 and the second light transmitting member 3 and suppresses a change in optical properties (wavelength, light amount, and the like) of the light passing between the second fluorescent body 30 and the second light transmitting member 3. As an example, the second optical bonding material 5 may be a resin having an optical transmissive property and an adhesive property. In FIG. 4, the second light transmitting member 3 and the second optical bonding material 5 are indicated by two-dot dashed lines.

The main body 11 is made of a material having a light shielding property (light absorbing property or light reflecting property), and more preferably made of a material (for example, a black ABS resin) having a light absorbing property. That is, the first wall portion 16 and the second wall portion 17 have a light shielding property. Therefore, the first wall portion 16 and the second wall portion 17 also function as a light shielding portion 13 that shields light being incident between the first accommodating space 14 and the second accommodating space 15.

As illustrated in FIGS. 2 and 3, the cover 12 is provided with a first light passing portion 18 and a second light passing portion 19. Each of the first light passing portion 18 and the second light passing portion 19 is a slit extending along the Y axis direction and has the same size and shape. The first light passing portion 18 faces the first accommodating space 14 in the Z axis direction, and the second light passing portion 19 faces the second accommodating space 15 in the Z axis direction. That is, the first light transmitting member 2 is disposed between the first light passing portion 18 and the first fluorescent body 20, and the second light transmitting member 3 is disposed between the second light passing portion 19 and the second fluorescent body 30. The shapes and sizes of the first light passing portion 18 and the second light passing portion 19 may be appropriately adjusted in accordance with the shape and size of the colored line CL of the chromatographic test tool 50.

The cover 12 is made of a material having a light shielding property, and more preferably made of a material having a light absorbing property (for example, black acrylic resin). That is, a first region 18a surrounding the first light passing portion 18 and a second region 19a surrounding the second light passing portion 19 in the cover 12 have a light shielding property (for example, a light absorbing property).

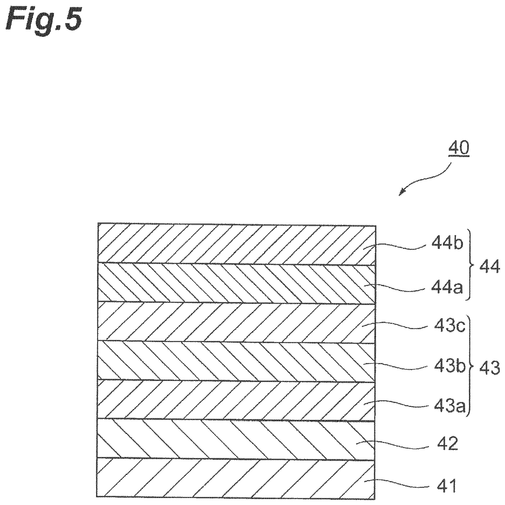

The first fluorescent body 20 is a fluorescent body that emits first fluorescence in the second wavelength band when irradiated with the first excitation light in the first wavelength band, and the second fluorescent body 30 is a fluorescent body that emits second fluorescence in the second wavelength band when irradiated with the second excitation light in the first wavelength band. In this embodiment, the first fluorescent body 20 and the second fluorescent body 30 are configured with a semiconductor fluorescent body 40 illustrated in FIG. 5, which includes a substrate 41, a graded layer 42 disposed on the substrate 41, a semiconductor layer 43 disposed on the graded layer 42, and an antioxidation layer 44 disposed on the semiconductor layer 43. For the convenience of illustration, the thickness of each layer is illustrated to be uniform regardless of the actual thickness. The first fluorescent body 20 and the second fluorescent body 30 are accommodated in the first accommodating space 14 and the second accommodating space 15, respectively, so that the side of the antioxidation layer 44 with respect to the semiconductor layer 43 becomes the side of the cover 12.

The semiconductor layer 43 includes a barrier layer 43a, a light emitting layer 43b, and a window layer 43c. The barrier layer 43a is disposed on the substrate 41 side with respect to the light emitting layer 43b, and the window layer 43c is disposed on the cover 12 side with respect to the light emitting layer 43b.

The light emitting layer 43b is made of a semiconductor material that is a fluorescent substance that emits fluorescence in the second wavelength band (first fluorescence or second fluorescence) by irradiation with excitation light (first excitation light or second excitation light) in the first wavelength band. The semiconductor material constituting the light emitting layer 43b is a compound semiconductor containing Ga, which is, for example, a mixed crystal of GaAs and GaP and is represented by GaAs₍₁₋ₓ₎Pₓ (0 ≤ x ≤ 1) (hereinafter, also referred to simply as "GaAsP"). As listed in the following Table 1, it is preferable that x is 0.5 or less from the viewpoint that the transition type is a direct transition type and the luminous efficiency is excellent. Such a fluorescent body is preferable as a fluorescent body, particularly, in the red range. The emission wavelength (wavelength of fluorescence) listed in Table 1 is a value calculated from the band gap energy Eg.

**[Table 1]**

| Compound Semiconductor (Compositional Formula) | x | Eg (ev) | Emission Wavelength (nm) | Type of Transition |
|---|---|---|---|---|
| | 0 | 1.42 | 873 | Direct Transition |
| | 0.05 | 1.48 | 840 | Direct Transition |
| | 0.1 | 1.53 | 809 | Direct Transition |
| | 0.15 | 1.59 | 779 | Direct Transition |
| | 0.2 | 1.65 | 751 | Direct Transition |
| | 0.25 | 1.71 | 725 | Direct Transition |
| | 0.3 | 1.77 | 700 | Direct Transition |
| | 0.35 | 1.83 | 676 | Direct Transition |
| | 0.4 | 1.9 | 653 | Direct Transition |
| GaAs₁₋ₓPₓ | 0.45 | 1.96 | 632 | Direct Transition |
| | 0.5 | 2.03 | 612 | Direct Transition |
| | 0.55 | 2.05 | 605 | Indirect Transition |
| | 0.6 | 2.07 | 599 | Indirect Transition |
| | 0.65 | 2.09 | 593 | Indirect Transition |
| | 0.7 | 2.11 | 587 | Indirect Transition |
| | 0.75 | 2.13 | 581 | Indirect Transition |
| | 0.8 | 2.16 | 575 | Indirect Transition |
| | 0.85 | 2.18 | 569 | Indirect Transition |
| | 0.9 | 2.21 | 562 | Indirect Transition |
| | 0.95 | 2.23 | 555 | Indirect Transition |
| | 1 | 2.26 | 549 | Indirect Transition |

As an example, the thickness of the light emitting layer 43b is 0.01 to 5 µm. In this embodiment, the thickness of the light emitting layer 43b of the first fluorescent body 20 and the thickness of the light emitting layer 43b of the second fluorescent body 30 are different from each other. Since the light amount of fluorescence (first fluorescence and second fluorescence) emitted from the semiconductor fluorescent body 40 increases in proportion to the thickness of the light emitting layer 43b, in this embodiment, in a case where the light amount of the first excitation light incident on the first light passing portion 18 and the light amount of the second excitation light incident on the second light passing portion 19 are equal to each other, the light amount of the first fluorescence emitted from the first light passing portion 18 and the light amount of the first fluorescence emitted from the second light passing portion 19 are different from each other. When the thickness of the light emitting layer 43b is equal to or larger than a certain value, the light amount of fluorescence hardly increases. Therefore, in at least one of the first fluorescent body 20 and the second fluorescent body 30, it is preferable that the thickness of the light emitting layer 43b is 3 µm or less.

The barrier layer 43a and the window layer 43c are layers made of a semiconductor material represented by Al_{y}Ga_{(1-y)}As_{(1-z)}Pz (0 ≤ y ≤ 1, 0 ≤ z ≤ 1)) (hereinafter, also referred to simply as "AlGaAsP"). As an example, the thickness of the barrier layer 43a is 0.01 to 5 µm, and the thickness of the window layer 43c is 0.01 to 5 µm.

The antioxidation layer 44 has a function of preventing oxidation of the semiconductor layer 43. The antioxidation layer 44 has, for example, an antireflection layer 44a and a protective layer 44b disposed on the side opposite to the semiconductor layer 43 with respect to the antireflection layer 44a. The antireflection layer 44a is a layer having a function of preventing reflection of the excitation light incident on the light emitting layer 43b in addition to the antioxidant function. The protective layer 44b is a layer that protects the surface exposed to the cover 12 side of the semiconductor fluorescent body 40 from physical and chemical factors. In this embodiment, a layer containing Si₃N₄ is provided as the antireflection layer 44a, and a layer containing SiO₂ is provided as the protective layer 44b. As an example, the thickness of the antireflection layer 44a is 0.01 to 0.3 µm and the thickness of the protective layer 44b is 0.01 to 0.5 µm.

The substrate 41 has a function of fixing the semiconductor layer 43. In this embodiment, the substrate is a GaAs substrate. As an example, the thickness of the substrate 41 is 100 to 1200 µm.

The graded layer 42 is a layer having a function of relaxing the lattice mismatch between the substrate 41 and the semiconductor layer 43. The graded layer 42 is a layer containing Ga, As, and P (for example, a layer made of GaAsP) similarly to the semiconductor layer 43, but the graded layer 42 is configured so that the content of P increases as approaching from the substrate 41 side to the semiconductor layer 43 side. Specifically, the graded layer 42 is configured so that the content of P is about the same as that of the semiconductor layer 43 in the vicinity of the interface with the semiconductor layer 43. The graded layer 42 may be a layer further containing Al (for example, a layer made of AlGaAsP). In a case where the graded layer 42 further includes Al, the graded layer 42 may be configured so that the content of Al increases as approaching from the substrate 41 side to the semiconductor layer 43 side, and may be configured so that the content of Al is about the same as that of the semiconductor layer 43 in the vicinity of the interface with the semiconductor layer 43.

The above-described semiconductor fluorescent body 40 is obtained, for example, by growing the graded layer 42, the barrier layer 43a, the light emitting layer 43b, and the window layer 43c in this order on the substrate 41 and forming the antireflection layer 44a and the protective layer 44b in this order thereon.

Next, calibration of the fluorescence measurement device 100 by using the reference body 1 according to this embodiment will be described. In this specification, the calibration of the fluorescence measurement device 100 denotes an operation of identifying the presence or absence of a deviation from a reference value of a fluorescence intensity, profile, and the like measured by the fluorescence measurement device 100. The reference body 1 according to this embodiment is useful, for example, for shipment adjustment, periodic test, and the like of the fluorescence measurement device 100. For example, at the time of shipment of the fluorescence measurement device 100, first, the fluorescence measurement of the reference body 1 according to this embodiment is performed with a reference machine. Subsequently, the fluorescence measurement of the reference body 1 according to this embodiment is performed by the fluorescence measurement device 100 (actual machine) to be tested, and a deviation between the emission intensity, profile, and the like measured by the reference machine and the emission intensity, profile, and the like measured by the actual machine is identified. At this time, if the emission intensity, profile, and the like of the actual machine are not within specified values, machine base adjustment is performed. By such calibration operation, the fluorescence measurement device 100 capable of performing stable fluorescence measurement can be shipped. In addition, at the periodic test of the fluorescence measurement device 100, the fluorescence measurement of the reference body 1 according to this embodiment is performed, and by comparing with the emission intensity, the profile, and the like measured by the reference machine, it is identified whether or not the measured emission intensity, the profile, and the like are within the specified values. As a result, it is possible to perform the failure diagnosis of the fluorescence measurement device 100. In addition, by measuring the reference body 1 according to this embodiment with a plurality of fluorescence measurement devices 100 and comparing the measured emission intensities, profiles, and the like, it is also possible to identify a difference between machines.

According to the reference body 1 of this embodiment, it is possible to identify the measurement sensitivity in a wide dynamic range by one measurement.

In addition, in this embodiment, since the support 10 includes the main body 11 and the cover 12, the main body 11 and the cover 12 may be made of materials corresponding to the respective functions. In addition, since the cover 12 is fixed to the main body 11 by the bolts 6, replacement of the first fluorescent body 20 and the second fluorescent body 30 can be easily performed. In addition, since there is a region where the first fluorescent body 20 and the second fluorescent body 30 are not accommodated in the first accommodating space 14 and the second accommodating space 15, removal of the first fluorescent body 20 and the second fluorescent body 30 can be easily performed.

In addition, in this embodiment, since the main body 11 includes the first holding portion and the second holding portion, the first fluorescent body 20 is held in the first accommodating space 14, and the second fluorescent body 30 is held in the second accommodating space 15. As a result, since variations in measured values are suppressed, it is possible to improve the accuracy of calibration.

In addition, in this embodiment, since the main body 11 is made of a material having a light shielding property, it is possible to shield the light incident between the first accommodating space 14 and the second accommodating space 15, and it is possible to suppress the incidence of excitation light and the emission of fluorescence from regions other than the first light passing portion 18 and the second light passing portion 19. Therefore, it is possible to suppress the influence of the excitation light and the fluorescence in one fluorescent body on the excitation light and the fluorescence in the other fluorescent body. In particular, in this embodiment, since the main body 11 is made of a material having a light absorbing property, the influence of scattering of the excitation light and the fluorescence on the fluorescence measurement can be suppressed. In addition, in this embodiment, since the first wall portion 16 and the second wall portion 17 have a light shielding property, the first wall portion 16 and the second wall portion 17 also function as the light shielding portion 13 that shields light being incident between the first accommodating space 14 and the second accommodating space 15. For this reason, the fluorescent substance accommodated in one of the accommodating spaces is hardly affected by the light (excitation light and fluorescence) leaked from the wall portion of the other accommodating space. As a result, since variations in measured values are suppressed, it is possible to improve the accuracy of calibration.

In this embodiment, the cover 12 is made of a material having a light shielding property, and the first region 18a surrounding the first light passing portion 18 and the second region 19a surrounding the second light passing portion 19 have a light shielding property, so that the influence of the light (first excitation light) irradiated to the first region 18a and the light (second excitation light) irradiated to the second region 19a on the fluorescence measurement can be suppressed. As a result, since variations in measured values are suppressed, it is possible to improve the accuracy of calibration. In particular, in this embodiment, since the first region 18a and the second region 19a are made of a material having a light absorbing property, variations in measured values caused by noise components such as scattered light are suppressed.

Furthermore, in this embodiment, since the first light transmitting member 2 which is disposed between the first light passing portion 18 and the first fluorescent body 20 and transmits the first excitation light and the first fluorescence and the second light transmitting member 3 which is disposed between the second light passing portion 19 and the second fluorescent body 30 and transmits the second excitation light and the second fluorescence are provided, deterioration of the first fluorescent body 20 and the second fluorescent body 30 caused by physical and chemical factors can be prevented. As a result, it is possible to perform calibration with a high accuracy over a long period of time.

In addition, in this embodiment, since the space between the first fluorescent body 20 and the first light transmitting member 2 and the space between the second fluorescent body 30 and the second light transmitting member 3 are filled with the first optical bonding material 4 and the second optical bonding material 5, respectively, optical loss at the interface between the fluorescent body and the light transmitting member is suppressed. As a result, since variations in measured values are suppressed, it is possible to improve the accuracy of calibration.

In addition, in this embodiment, since the fluorescent bodies (the first fluorescent body 20 and the second fluorescent body 30) are configured with the semiconductor fluorescent body 40 and the semiconductor material constituting the light emitting layer 43b of the semiconductor fluorescent body 40 is a compound semiconductor containing Ga, it is possible to easily change the fluorescence characteristics by adjusting the types and content ratios of the compound materials as described later. In addition, in this embodiment, since the semiconductor material constituting the light emitting layer 43b is a compound semiconductor represented by GaAs₍₁₋ₓ₎Pₓ (0 ≤ x ≤ 1), good fluorescence can be obtained, particularly, in the red range. In this embodiment, the barrier layer 43a made of AlGaAsP, the light emitting layer 43b made of GaAsP, and the window layer 43c made of AlGaAsP are stacked in this order, and the semiconductor layer 43 has a so-called well structure, so that luminous efficiency is excellent. In addition, in this embodiment, since the semiconductor fluorescent body 40 includes the antioxidation layer 44, deterioration of the fluorescent body caused by oxidation can be prevented, and it is possible to perform calibration with a high accuracy over a long period of time. In addition, since the semiconductor fluorescent body 40 described above generally has a fluorescence excitation spectrum approximate to the fluorescence excitation spectrum of a red excitation reagent used for immunochromatography assay, the semiconductor fluorescent body can be appropriately used for a calibration reference body for the fluorescence measurement device 100 (immunochromato reader) used for an immunochromatography assay.

Although one embodiment of the reference body according to the present disclosure has been described above, the present disclosure is not limited to the above embodiment.

For example, the reference body may not be provided with the bolts 6, and for example, the main body 11 and the cover 12 may be fixed with a resin having an adhesive property. In addition, the main body 11 and the cover 12 may be integrally molded.

In addition, for example, in the main body 11, the first wall portion 16 and the second wall portion 17 and portions other than the first wall portion 16 and the second wall portion 17 may be made of different materials. For example, in the main body 11, only the first wall portion 16 and the second wall portion 17 may be made of a material having a light shielding property. In addition, only one of the first wall portion 16 and the second wall portion 17 may be made of a material having a light shielding property. In addition, the first wall portion 16 and the second wall portion 17 do not have a light shielding property, but a light shielding member may be separately provided between the first accommodating space 14 and the second accommodating space 15.

In addition, for example, in the cover 12, the first region 18a and the second region 19a and portions other than the first region 18a and the second region 19a may be made of different materials. For example, in the cover 12, only the first region 18a and the second region 19a may be made of a material having a light shielding property. In addition, only one of the first region 18a and the second region 19a may be made of a material having a light shielding property. In addition, the first region 18a and the second region 19a do not have a light shielding property, but a light shielding member may be separately provided between the first region 18a and the second region 19a.

In addition, the first light passing portion 18 and the second light passing portion 19 may be made of, for example, a light transmissive material. The first light passing portion 18 and the second light passing portion 19 may be light transmitting regions formed in the cover 12.

In addition, for example, by changing the content ratio x of P in GaAs₍₁₋ₓ₎Pₓ constituting the light emitting layer 43b, the fluorescence characteristics of the fluorescent body may be changed. Since the band gap energy is increased as increasing the content ratio x (bringing x close to 1), the wavelength band (second wavelength band) of fluorescence can be shifted to the shorter wavelength side. When the content ratio x is 0.5 or less, direct transition occurs, so that the fluorescent intensity tends to be excellent.

In addition, for example, by changing the content ratio y of Al and the content ratio z of P in Al_{y}Ga_{(1-y)}As_{(1-z)}Pz (0 ≤ y ≤ 1, 0 ≤ z ≤ 1) constituting the window layer 43c and the barrier layer 43a, the fluorescence characteristics of the fluorescent body may be changed. From the viewpoint of further improving the luminous efficiency, the content ratio y in the window layer 43c may be 0.05 to 1. Similarly, from the viewpoint of further improving the luminous efficiency, the content ratio y in the barrier layer 43a may be 0.05 to 1.

In addition, the light emitting layer 43b may contain, for example, a material other than a semiconductor material. In addition, the semiconductor material contained in the light emitting layer 43b is not limited to GaAsP. The semiconductor material contained in the light emitting layer 43b may be, for example, InGaAs, InGaP, InAsP, AlInAs, AlAsP, AlGaAs, AlGaP, InGaN, AlGaN, InNAs, GaNAs, InGaAsP, AlInGaAs, AlInGaP, AlInAsP, AlGaAsP, GaInNAs, AlInGaN, AlInNAs, AlGaNAs, AlInGaAsP, AlGaInNAs, or the like. By changing the semiconductor material, the fluorescence characteristics of the fluorescent body can be changed. That is, by changing the semiconductor material, the wavelength band (second wavelength band) of fluorescence emitted from the fluorescent body can be changed. Table 2 lists the fluorescence wavelength (emission wavelength) assumed when each compound semiconductor is used for a fluorescent body. In addition, the emission wavelength listed in Table 2 is a value calculated from the band gap energy Eg.

**[Table 2]**

| Compound Semiconductor (Compositional Formula) | Composition | Emission Wavelength (nm) |
|---|---|---|
| InₓGa₁₋ₓAs | 0 ≤ x ≤ 1 | 873 to 3444 |
| InₓGa₁₋ₓP | 0 ≤ x ≤ 1 | 549 to 919 |
| GaAs₁₋ₓPₓ | 0 ≤ x ≤ 1 | 549 to 873 |
| InAs₁₋ₓPₓ | 0 ≤ x ≤ 1 | 919 to 3444 |
| AlₓIn₁₋ₓAs | 0 ≤ x ≤ 1 | 574 to 3444 |
| AlAs₁₋ₓPₓ | 0 ≤ x ≤ 1 | 500 to 574 |
| AlₓGa₁₋ₓAs | 0 ≤ x ≤ 1 | 574 to 873 |
| AlₓGa₁₋ₓP | 0 ≤ x ≤ 1 | 500 to 549 |
| InₓGa₁₋ₓN | 0 ≤ x ≤ 1 | 366 to 1550 |
| AlₓGa₁₋ₓN | 0 ≤ x ≤ 1 | 200 to 366 |
| InN₁₋ₓAsₓ | 0 ≤ x ≤ 1 | 1550 to 3444 |
| GaN₁₋ₓAsₓ | 0 ≤ x ≤ 1 | 366 to 873 |
| InₓGa₁₋ₓAs_{y}P_{1-y} | 0 ≤ x ≤ 1,0 ≤ y ≤ 1 | 549 to 3444 |
| AlₓIn_{y}Ga_{1-x-y}As | 0 ≤ x ≤ 1,0 ≤ y ≤ 1 | 549 to 3444 |
| AlₓIn_{y}Ga_{1-x-y}P | 0 ≤ x ≤ 1,0 ≤ y ≤ 1 | 500 to 919 |
| AlₓIn₁₋ₓAs_{y}P_{1-y} | 0 ≤ x ≤ 1,0 ≤ y ≤ 1 | 500 to 3444 |
| AlₓGa₁₋ₓAs_{y}P_{1-y} | 0 ≤ x ≤ 1,0 ≤ y ≤ 1 | 500 to 873 |
| GaₓIn₁₋ₓN_{y}As_{1-y} | 0 ≤ x ≤ 1,0 ≤ y ≤ 1 | 366 to 3444 |

In addition, the window layer 43c and the barrier layer 43a may contain, for example, a material other than the semiconductor material. In addition, the semiconductor material contained in the window layer 43c and the barrier layer 43a is not limited to AlGaAsP. The semiconductor material contained in the window layer 43c and the barrier layer 43a may be, for example, AlGaAs, AlGaP, AlGaN, InNAs, GaNAs, InGaAsP, AlInGaAs, AlInGaP, AlInAsP, GaInNAs, AlInAs, AlAsP, AlInGaN, AlGaAsP, AlInNAs, AlGaNAs, AlInGaAsP, AlGaInNAs, or the like. In addition, the semiconductor layer 43 may not include the window layer 43c and the barrier layer 43a.

In addition, for example, the antioxidation layer 44 may be configured with only one of the antireflection layer 44a and the protective layer 44b, may have layers other than the antireflection layer 44a and the protective layer 44b, and may be configured with only layers other than the antireflection layer 44a and the protective layer 44b. The antireflection layer 44a may contain a component other than Si₃N₄ and may be made of a component other than Si₃N₄. The protective layer 44b may contain a component other than SiO₂ and may be made of a component other than SiO₂. The fluorescent body may not have the antioxidation layer 44.

In addition, for example, the fluorescent body may be made of a fluorescent resin 60. The fluorescent resin 60 contains a light transmissive resin and a fluorescent substance (and a fluorescent reagent containing the fluorescent substance) dispersed in the light transmissive resin. In the case of using the fluorescent resin 60, by appropriately selecting the fluorescent substance, the measurement sensitivity in a desired fluorescence wavelength band can be identified. The fluorescent reagent may be in a liquid state and may be in a solid state. As the fluorescent reagent, for example, organic dyes such as Alexa Fluor 647 (manufactured by Thermo Fisher Scientific Inc. "Fluor" is a registered trademark), semiconductor crystals such as Q-dot, metal complexes such as DTBTA-Eu³⁺, or the like may be used. In the case of using the fluorescent resin 60 as the fluorescent body, for example, the light amount of the fluorescence can be adjusted by adjusting the concentration of the fluorescent substance in the fluorescent resin 60.

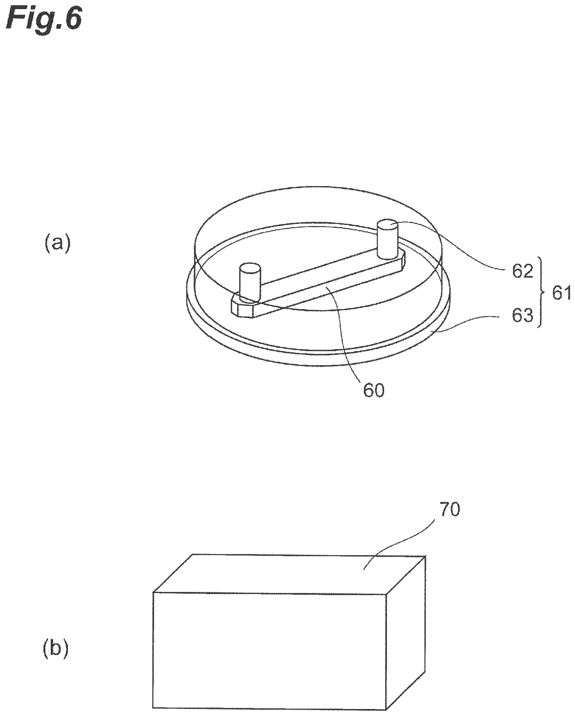

For example, as illustrated in FIG. 6(a), the fluorescent resin 60 is used in the state where the fluorescent resin is fixed to a fixing member 61. That is, the reference body is manufactured by accommodating the fixing member 61 in the first accommodating space 14 and the second accommodating space 15. The fixing member 61 illustrated in FIG. 6(a) includes a light transmissive substrate 63 such as glass and a flow path 62 manufactured by using a resin having a light shielding property (for example, one formed by mixing carbon, boron, or the like into a resin such as PDMS (polydimethylsiloxane)). The fluorescent resin 60 can be produced by using, for example, the following method. First, a light-transmitting ultraviolet curable resin and a fluorescent reagent are mixed to prepare a resin composition. Next, by using a pipette, the resin composition is injected into the flow path 62 of the fixing member 61 illustrated in FIG. 6(a). Next, the resin composition is cured by irradiating ultraviolet rays from the light transmissive substrate 63 side of the fixing member 61. Therefore, the fluorescent resin 60 fixed in the fixing member 61 can be obtained.

In addition, for example, the fluorescent body may be configured with a fluorescent glass 70 illustrated in FIG. 6(b). The fluorescent glass 70 contains a glass and a fluorescent substance (and a fluorescent reagent containing the fluorescent substance) dispersed in the glass. In the case of using the fluorescent glass 70, the measurement sensitivity in a desired fluorescence wavelength band can be identified by appropriately selecting the fluorescent substance. In addition, since the fluorescent glass is not easily oxidized, it is possible to perform calibration with a high accuracy over a long period of time. Examples of the fluorescent reagent are the same as those of the fluorescent reagent used for the fluorescent resin 60. As the fluorescent glass 70, for example, commercially available products such as "Lumilass-R7", "Lumilass-G9", and "Lumilass-B" manufactured by SUMITA OPTICAL GLASS, Inc. may be used. The above-described fluorescent resin 60 may be a fluorescent body having a shape as illustrated in FIG. 6(b).

In addition, for example, the same fluorescent body may be used as the first fluorescent body 20 and the second fluorescent body 30. In this case, the light amount of the first fluorescence emitted from the first light passing portion 18 and the light amount of the second fluorescence emitted from the second light passing portion 19 are adjusted by a light amount adjusting means other than the means for adjusting the light amount of the fluorescence emitted from the first fluorescent body 20 and the second fluorescent body 30. Adjustment of the light amount may be performed, for example, by changing the shapes and sizes of the first light passing portion 18 and the second light passing portion 19. In this case, the shapes of the first light passing portion 18 and the second light passing portion 19 may be slits having a mesh structure. In a case where the first light passing portion 18 and the second light passing portion 19 are light transmitting regions formed in the cover 12, the adjustment of the light amount may be performed by forming the regions with materials having different light transmissivities. In addition, the adjustment of the light amount may be performed by using the first light transmitting member 2 and the second light transmitting member 3 which are made of materials having different light transmissivities. As the member, an ND filter (neutral density filter) may be exemplified. In addition, the above-described light amount adjusting means may be combined.

### EXAMPLE

Hereinafter, the contents of the present disclosure will be described in more detail by using examples, but the present disclosure is not limited to the following examples.

### (Example 1)

A GaAs substrate (thickness: 350 µm) was prepared, and a graded layer (thickness: 10 µm), a barrier layer (thickness: 0.1 µm), a light emitting layer (thickness: 0.7 µm), and a window layer (thickness: 0.035 µm) were grown in this order on the substrate. The graded layer was configured as a layer containing Ga, As, Al, and P. The contents of Al and P were adjusted to be increased as approaching from the substrate side toward the barrier layer side so as to have the same configuration as the barrier layer in the vicinity of the interface with the barrier layer. In addition, the barrier layer was made of Al_{y}Ga_{(1-y)}As_{(1-z)}Pz (y = 0.65, z = 0.23), and the light emitting layer was made of GaAs₍₁₋ₓ₎Pₓ (x = 0. 23), and the window layer was made of Al_{y}Ga_{(1-y)}As_{(1-z})Pz (y = 0.65, z = 0.23). Next, as an antioxidation layer, an antireflection layer (thickness: 0.095 µm) and a protective layer (thickness: 0.3 µm) were sequentially formed on the window layer. The antireflection layer was made of Si₃N₄, and the protective layer was made of SiO₂. By the above operation, a semiconductor fluorescent body was obtained.

Subsequently, the reference body illustrated in FIGS. 2 to 4 was produced using the semiconductor fluorescent body obtained in Example 1 as the first fluorescent body and the second fluorescent body. The main body of the reference body was made of a black ABS resin so that the first wall portion and the second wall portion had a light shielding property. An acrylic plate made of a black acrylic resin was used for the cover. An ND filter (extinction ratio: 80%) was used as the first light transmitting member, and an ND filter (extinction ratio: 90%) was used as the second light transmitting member.

### (Fluorescence Measurement)

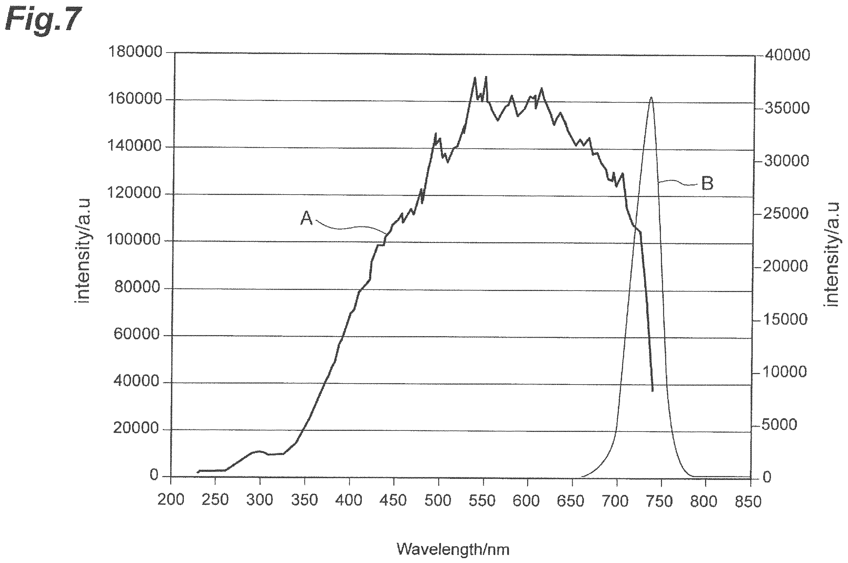

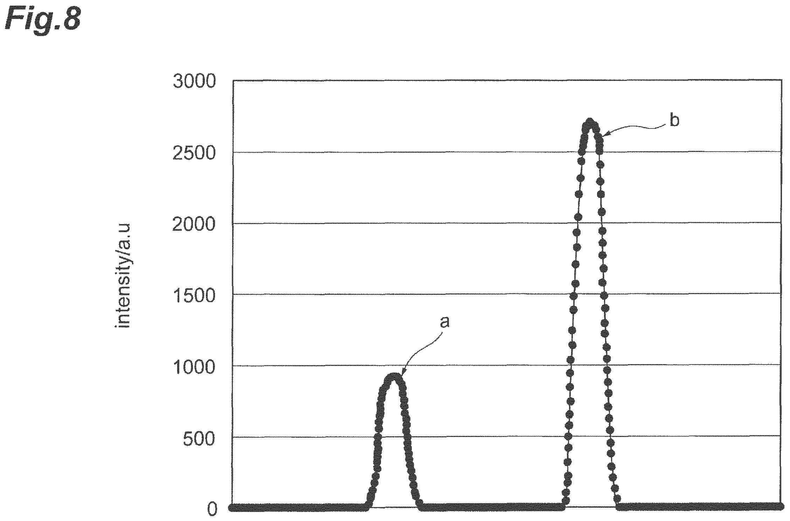

Fluorescence measurement of the obtained reference body was performed by using the fluorescent immunochromato reader illustrated in FIG. 1. For excitation, a 655-nm semiconductor laser was used as the semiconductor light emitting element, and a 670-nm short pass filter was used as the short pass filter. In addition, for the fluorescence measurement, a 690-nm long pass filter was used as a long pass filter, and a Si photodiode was used as a semiconductor light receiving element. Irradiation of excitation light was performed at 1 mW. The results are illustrated in FIGS. 7 and 8.

FIG. 7 is a diagram illustrating a fluorescence excitation spectrum of the semiconductor fluorescent body itself. Spectrum A illustrates a spectrum of the excitation light irradiated to the semiconductor fluorescent body and spectrum B illustrates a spectrum of fluorescence emitted from the semiconductor fluorescent body by irradiation with the excitation light. In FIG. 7, the horizontal axis represents the wavelength, and the vertical axis represents the intensity. In addition, the vertical axis on the left side represents the intensity of the excitation spectrum, and the vertical axis on the right side represents the intensity of the fluorescence spectrum. As illustrated in FIG. 7, it was identified that the semiconductor fluorescent body of Example 1 emits fluorescence having a peak at 730 nm by excitation light having a wavelength band of 450 nm to 700 nm.

FIG. 8 is a diagram illustrating a fluorescence profile obtained by fluorescence measurement of a reference body using the fluorescent immunochromato reader illustrated in FIG. 1. In FIG. 8, the vertical axis represents the intensities of the first fluorescence (a in FIG. 8) and the second fluorescence (b in FIG. 8). As illustrated in FIG. 8, according to the reference body of Example 1, it is possible to stably identify the measurement sensitivity in a wide dynamic range by one measurement.

### Reference Signs List

1: reference body, 2: first light transmitting member, 3: second light transmitting member, 4: first optical bonding material, 5: second optical bonding material, 10: support, 11: main body, 12: cover, 13: light shielding portion, 14: first accommodating space, 15: second accommodating space, 16: first wall portion, 17: second wall portion, 18: first light passing portion, 18a: first region, 19: second light passing portion, 19a: second region, 20: first fluorescent body, 30: second fluorescent body, 40: semiconductor fluorescent body, 43: semiconductor layer, 43b: light emitting layer, 44: antioxidation layer, 60: fluorescent resin, 70: fluorescent glass.

## Claims

1. A calibration reference body for a fluorescence measurement device, comprising:
a support provided with a first light passing portion, a second light passing portion, a first accommodating space facing the first light passing portion, and a second accommodating space facing the second light passing portion;
a first fluorescent body accommodated in the first accommodating space and configured to emit first fluorescence in a second wavelength band when irradiated with first excitation light in a first wavelength band through the first light passing portion;
a second fluorescent body accommodated in the second accommodating space and configured to emit second fluorescence in the second wavelength band when irradiated with second excitation light in the first wavelength band through the second light passing portion; and
a light shielding portion disposed between the first accommodating space and the second accommodating space,
wherein, in a case where a light amount of the first excitation light incident on the first light passing portion and a light amount of the second excitation light incident on the second light passing portion are equal to each other, a light amount of the first fluorescence emitted from the first light passing portion and a light amount of the second fluorescence emitted from the second light passing portion are different from each other.

2. The reference body according to claim 1, wherein the support includes:
a first holding portion that holds the first fluorescent body accommodated in the first accommodating space; and
a second holding portion that holds the second fluorescent body accommodated in the second accommodating space.

3. The reference body according to claim 2,
wherein the first holding portion is a first wall portion that defines the first accommodating space,
wherein the second holding portion is a second wall portion that defines the second accommodating space, and
wherein at least one of the first wall portion and the second wall portion constitutes the light shielding portion.

4. The reference body according to any one of claims 1 to 3, wherein at least a first region surrounding the first light passing portion and a second region surrounding the second light passing portion of the support have a light shielding property.

5. The reference body according to any one of claims 1 to 4, wherein the support includes:
a main body provided with the first accommodating space and the second accommodating space; and
a cover provided with the first light passing portion and the second light passing portion.

6. The reference body according to any one of claims 1 to 5, further comprising:
a first light transmitting member disposed between the first light passing portion and the first fluorescent body and configured to transmit the first excitation light and the first fluorescence; and
a second light transmitting member disposed between the second light passing portion and the second fluorescent body and configured to transmit the second excitation light and the second fluorescence.

7. The reference body according to claim 6, further comprising:
a first optical bonding material disposed between the first fluorescent body and the first light transmitting member; and
a second optical bonding material disposed between the second fluorescent body and the second light transmitting member.

8. The reference body according to claim 6 or 7,
wherein the first light transmitting member has a function of changing characteristics of the first excitation light, and
wherein the second light transmitting member has a function of changing characteristics of the second excitation light.

9. The reference body according to any one of claims 1 to 8, wherein at least one of the first fluorescent body and the second fluorescent body includes a semiconductor layer having a light emitting layer containing a semiconductor material as a fluorescent substance.

10. The reference body according to claim 9, wherein the semiconductor material is a compound semiconductor containing Ga.

11. The reference body according to claim 10, wherein the compound semiconductor is GaAs₍₁₋ₓ₎Pₓ (0 ≤ x ≤ 1).

12. The reference body according to any one of claims 9 to 11, wherein the semiconductor layer further includes a layer containing AlGaAsP on a side of the light emitting layer on which the excitation light is incident and on a side opposite thereto.

13. The reference body according to any one of claims 9 to 12, wherein at least one of the first fluorescent body and the second fluorescent body further includes an antioxidation layer on a side of the light emitting layer on which the excitation light is incident.

14. The reference body according to any one of claims 1 to 8, wherein at least one of the first fluorescent body and the second fluorescent body is made of a fluorescent resin containing a light transmissive resin and a fluorescent substance dispersed in the light transmissive resin.

15. The reference body according to any one of claims 1 to 8, wherein at least one of the first fluorescent body and the second fluorescent body is made of a fluorescent glass containing a glass and a fluorescent substance dispersed in the glass.
